# EUROPEAN PATENT SPECIFICATION

(11) **EP 4 206 459 B1**
(45) Date of publication and mention of the grant of the patent: **05.03.2025**
(21) Application number: 21879579.7
(22) Date of filing: 11.10.2021
(51) Int. Cl.: F03B 17/06

(54) **FLOATING INDEPENDENT X-SHAPED SELF-ALIGNING MULTIPLE HYDRO-GENERATOR WITH MAXIMUM THRUST SURFACE**
SCHWIMMENDER UNABHÄNGIGER X-FÖRMIGER SELBSTAUSRICHTENDER MEHRFACHHYDROGENERATOR MIT MAXIMALER DRUCKFLÄCHE
HYDROGÉNÉRATEUR MULTIPLE INDÉPENDANT EN FORME DE PALE FLOTTANTE À SURFACE MAXIMALE DE POUSSÉE ET AUTO-ORIENTABLE

(30) Priority: 15.10.2020 ES 202032234 U
(43) Date of publication of application: 05.07.2023
(73) Proprietor: Montero Gómez, José Manuel, 18194 Churriana de la Vega (ES)
(72) Inventor: Montero Gómez, José Manuel, 18194 Churriana de la Vega (ES)
(74) Representative: Sahuquillo Huerta, Jesús
(86) International application number: PCT/ES2021/070740
(87) International publication number: WO 2022/079332

(56) References cited:
- WO-A2-2012/141470
- CA-A1- 2 919 164
- CN-A- 102 691 610
- CN-A- 102 996 318
- CN-A- 109 356 772
- CN-A- 110 821 744
- CN-A- 110 821 744
- GB-A- 2 464 744
- US-A- 4 095 422
- US-A- 4 095 422

## Description

### Technical sector

The present invention falls within the field of renewable energy production systems, specifically in the field of hydroelectric energy and devices for the generation of energy from water currents in rivers and seas.

### Background of the invention

The production of energy from renewable sources has become increasingly important in global energy production over time and is key to the sustainability of the energy system and the fight against climate change.

One example of renewable energy that has been used for centuries is the harnessing of the energy of water currents in rivers and canals and converting it into mechanical energy. Hydroelectric power in particular, i.e., the harnessing of water currents in waterfalls and their conversion into mechanical energy by means of turbines and in turn into electrical energy by means of alternators, is one of the main sources of renewable energy in use today.

In the seas and oceans there are also various forms of harnessing water energy, for example by harnessing the tides (tidal energy), waves (wave energy) and ocean currents. In these cases, the level of harnessed energy in relation to the economic and environmental cost of the systems needed to extract it has made it difficult to implement.

Especially in the case of harnessing both sea and river currents and converting them into electrical energy, various types of devices have been developed, some on a small scale and others on a large scale, depending on the environment and the level of energy produced.

These devices are normally based on turbines with rotors of various geometries linked to alternators or electric generators. In general, they are completely submerged and fixed to the ocean, sea, or river bottoms. The disadvantage of this type of design is that, as all the mechanical and electrical equipment is below the surface of the water, maintenance work is complicated, and the danger of short circuits and corrosion increases. In addition, electrical connections have to be made underwater, which is highly complex and costly.

On the other hand, such equipment is generally fixed in a rigid position and can therefore suffer or cause damage from extreme impacts. In addition, they often require a support structure from the seabed or river bottom with a high environmental impact. In some cases, the device blocks the water current, not maintaining a passage for fauna and hindering the passage of ecological flows in the case of being used in rivers.

From a performance point of view, existing equipment tends to operate in only one direction and direction of the water flow, which limits the time of use of the water flow and the locations in which it can be used. On the other hand, existing equipment has a high resistance to drifting in the water flow, which also makes it difficult to orientate the equipment in relation to the water flow.

Therefore, in the case of allowing a change of orientation, complicated manoeuvres are necessary for optimal orientation in direction and direction in the face of changing water currents.

Finally, in many cases, the equipment often converts electrical energy to a single generator, which means less production flexibility and total system failure in the event of a breakdown.

It is for all these reasons that there is a need in the market for the production of electrical energy through equipment that, by taking advantage of marine and river currents, overcomes the disadvantages described above, allowing the use of currents regardless of their orientation and having little resistance to "drift" by the current. It is also desirable that they can be fixed flexibly and reduce their environmental impact without needing a support structure from the seabed or river bottom, and without blocking the current, maintaining a passage for fauna and an ecological flow in the case of applications in rivers, and additionally allowing mechanical and electrical maintenance above the water surface, with several alternators that allow greater flexibility of use.

As a background, there is the invention ES1140760U on a mechanism for converting the linear motion of a fluid into the rotational motion of a shaft which, although it does not have the features described above on its own, may form part of a larger device which does have them Another example of a floating multiple hydrogenerator is disclosed in US 4 095 422 A.

### Description of the invention

The object of the present invention is to obtain an independent multiple hydrogenerator on a floating blade with a maximum thrust surface and self-orientable, which generates electrical energy by taking advantage of marine and river currents independently of their orientation and having little resistance to drifting by the current.

Another object of the present invention is to obtain an independent multiple hydrogenerator on a floating blade with maximum thrust surface and self-orientable, which can be fixed in a flexible way, thus reducing damage from external impacts, and has a reduced environmental impact as it does not need a support structure from the sea or river bottom and does not block the current, maintaining a passage for fauna and an ecological flow in the case of applications in rivers.

Another object of the present invention is to obtain an independent multiple hydrogenerator on a floating blade with a maximum thrust surface and self-orientable that allows its electrical connection, as well as its mechanical and electrical maintenance above the surface of the water, having several alternators that allow greater flexibility of use.

The independent multiple hydrogenerator on a floating blade with a maximum thrust surface and self-orientable which is the subject of the present invention is formed, at least, by a floating structure in the form of a blade with four arms at each end of which there is an electric generator whose shaft is driven by the device defined in the document ES1140760U Mechanism for the conversion of the linear movement of a fluid into the rotational movement of a shaft, which we will refer to hereinafter as the "conversion mechanism"

As described in ES1140760U, each of the conversion mechanisms basically consists of a rotor with four arms attached to a main rotation axis, the ends of which incorporate oscillating thrust pieces that act as blades.

Considering the conversion mechanisms arranged clockwise around the central axis of the blade, each of them is configured for clockwise or counter clockwise rotation alternately. That is, if one rotates clockwise, the next rotates counter clockwise, the next rotates clockwise and the last rotates counter clockwise.

This configuration of four generators and counter-rotating vane-shaped converter mechanisms allow maximum use to be made of the thrust surface opposite the water flow.

A tube of a length greater than the depth reached by the conversion mechanisms is attached to the bottom of the central part of the structure in the form of a cross. This tube is partially closed at its lower end and has a chain or mooring cable attached to its central axis to the anchor or bottom anchor. This tube has two openings for the incoming and outgoing electrical cables.

The tube has a fixed plate attached to it along the entire length of its generatrix and located at the mid-position of the imaginary line joining two adjacent conversion mechanisms clockwise about the axis of the blade.

The forces acting on the fixed plate rotate the assembly so that it always faces the entire cross-section of the maximum thrust surface perpendicular to the direction of the water flow, which enters from one side of the imaginary square formed by the four converter mechanisms.

The counter clockwise alternation of the direction of rotation of the conversion mechanisms in the blade configuration with fixed plate thus forces the assembly to orient itself by offering one of the sides of the imaginary square formed by the four generators in the direction of flow of the water current, maximising the thrust surface of this current and, therefore, the production of energy.

Each of the electrical generators is accessible out of the water by means of a hatch at the top of the floating blade-shaped structure.

The floating, vane-shaped structure has a dome in its centre, which is also accessible through a hatch, in the interior of which the connections, couplings and electrical processing of the electrical energy waves produced independently by each of the electrical generators are carried out.

The electrical waves produced by the four independent generators can be treated electrically and coupled in series, in parallel or in mixed configuration, depending on the speed of the water flow at any given moment (even at low speeds) for maximum energy utilisation.

The device thus described has the main advantages of the invention, as well as other additional advantages, such as its lack of impact on the seabed, its low visual impact, and its simple construction, not requiring dams or civil works to channel the water currents.

It is also a modular system that can be connected to other similar equipment and can produce energy continuously as long as there is water flow in any direction and direction.

Finally, the device provides space for power electronics elements, transformers, etc., enabling connection to the distribution network either in direct current with the maximum possible voltage and transformation to earth, or in alternating current with transformation in each group and output at the highest possible voltage or at mains voltage.

Throughout the description and the claims, the word "comprising" and its variants are not intended to exclude other technical features, components or steps. To those skilled in the art, other objects, advantages and features of the invention will be apparent in part from the invention and in part from the practice of the invention. The following examples and drawings are provided by way of illustration and are not intended to restrict the present invention.

### Brief description of the drawings

In order to complement the description herein and to assist in a better understanding of the features of the invention, a set of drawings is attached hereto as an integral part of the said description, in which the following is illustratively and non-limitingly depicted:
Figure 1a shows an elevation view of a preferred embodiment of the self-orienting, maximum thrust area floating blade independent multiple hydrogenerator of the present invention.
Figure 1b shows a top plan view of a preferred embodiment of the self-orienting, maximum thrust area floating blade independent multiple hydrogenerator of the present invention.
Figure 1c shows a lower plan view of a preferred embodiment of the self-orienting, maximum thrust area floating blade independent multiple hydrogenerator of the present invention.
Figure 1d shows a side view of a preferred embodiment of the self-orienting, maximum thrust area floating blade independent multiple hydrogenerator of the present invention.
Figure 2 shows a top perspective view of a preferred embodiment of the self-orienting, maximum thrust area floating blade independent multiple hydrogenerator of the present invention

### Preferred embodiment of the invention

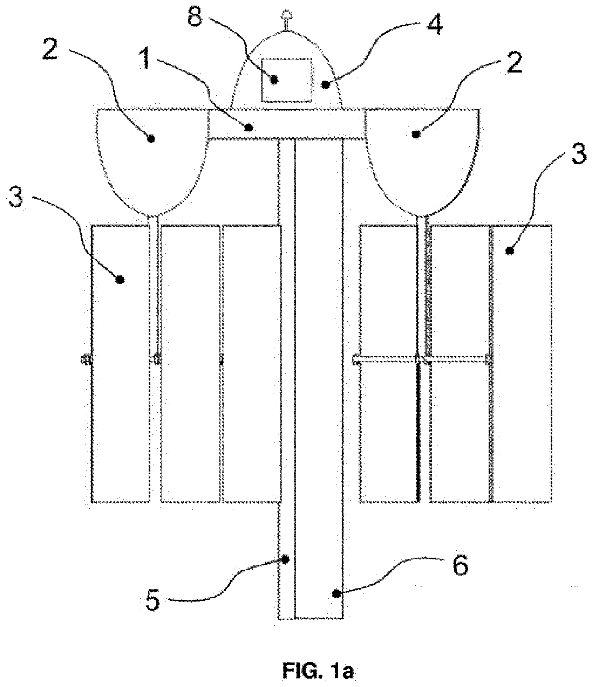

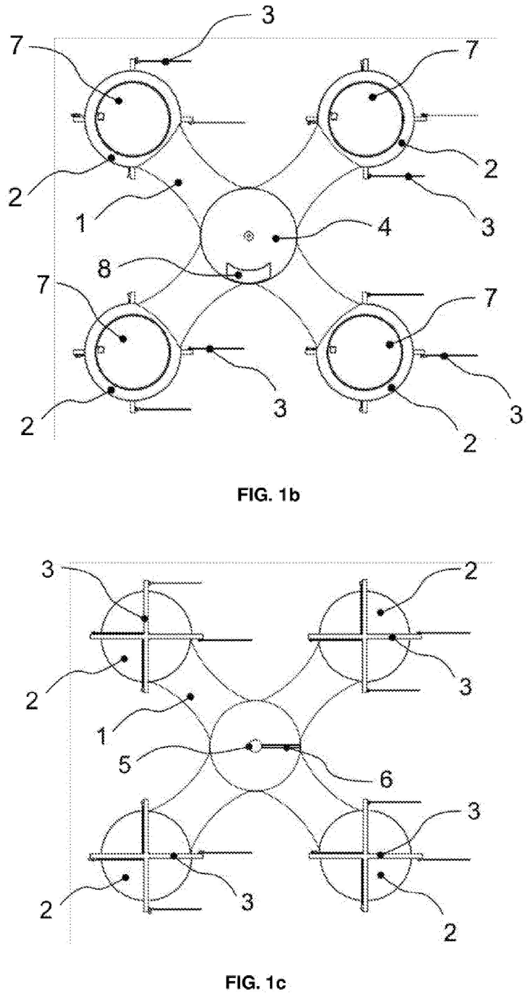

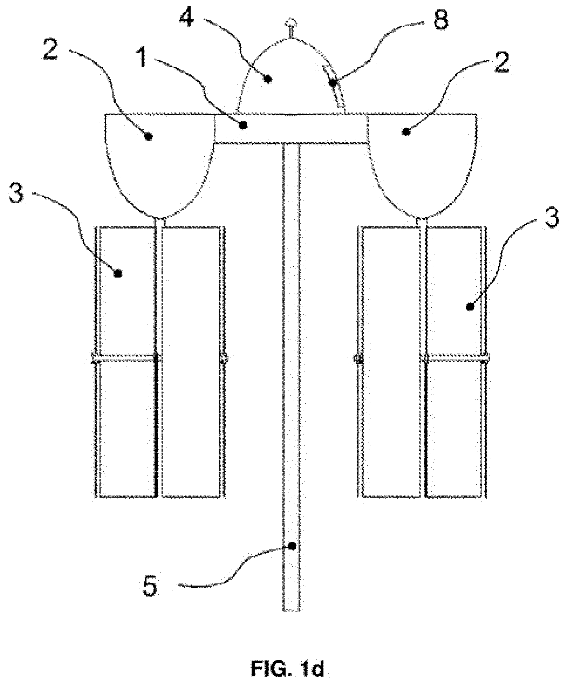

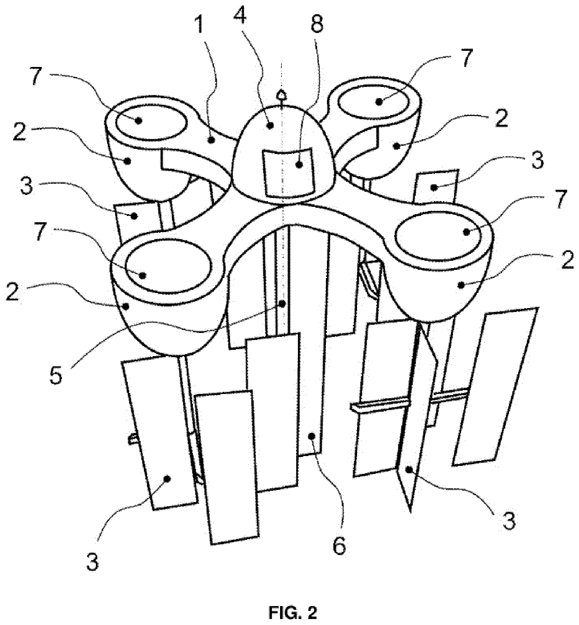

Using the numbering adopted in Figures 1 and 2 of the present documents to identify the elements that make up the floating blade independent multiple hydrogenerator with maximum thrust surface and self-orientable which is the subject of the present invention, we proceed to the description of these elements for a preferred embodiment of the invention.

In a preferred embodiment of the invention, the self-orientable floating blade independent multiple hydrogenerator with maximum thrust surface and self-orientable consists of at least a floating blade-shaped structure (1) with four arms at each end of which there is an electric generator (2) driven by a mechanism for converting the linear motion of a fluid into the rotational motion of a shaft (3).

Considering the conversion mechanisms (3) arranged clockwise around the central axis of the blade (1), each of them is configured to rotate clockwise or counter clockwise alternately. That is to say, if one turns clockwise, the next one will turn counter clockwise, the next one clockwise and the last one counter clockwise.

In a preferred embodiment of the invention, a tube (5) of a length greater than the depth reached by the conversion mechanisms (3) is attached to the central part of the vane-shaped structure (1) on its underside. This tube (5) is partially closed at its lower end and has a chain or mooring cable attached to its central axis to the anchor or bottom Deadman. This tube (5) has two openings for the inlet and outlet electrical cables.

The tube (5) has a fixed plate (6) attached to it along the entire length of its generatrix and located at the mid-position of the imaginary line joining two mechanisms of (3) adjacent to each other clockwise about the axis of the blade (1).

The forces acting on the fixed plate (6) rotate the assembly so that it always faces the entire cross-section of the maximum thrust surface perpendicular to the direction of the water flow, which enters through one side of the imaginary square that would form the four conversion mechanisms (3).

The counter clockwise alternation of the direction of rotation of the conversion mechanisms (3) in the blade configuration (1) with fixed plate (6) thus forces the assembly to orient itself by offering one of the sides of the imaginary square formed by the four generators in the direction of flow of the water current, maximising the thrust surface of this current and, therefore, the production of energy.

Each of the electrical generators (2) is accessible out of the water through a hatch (7) at the immediate top of the floating blade-shaped structure (1).

The floating blade-shaped structure (1) has at its centre and out of the water a dome (4), also accessible through a hatch (8), inside which the connections, couplings and electrical treatment of the electrical energy waves produced independently by each of the electrical generators (2) are carried out.

In a preferred embodiment of the invention, the electrical waves produced by the four independent generators (2) can be treated electrically and coupled in series, in parallel or in a mixed configuration, depending on the speed of the water flow at any given moment (even at low speeds) for maximum energy exploitation.

## Claims

1. Independent multiple hydrogenerator on a floating blade with maximum thrust surface and self-orienting employing a series of conversion mechanisms (3) for converting the linear motion of a fluid into the rotational motion of a shaft, whereby the hydrogenerator comprises at least one floating blade-shaped structure (1) with four arms at each end of which there is an electric generator (2) driven by a conversion mechanism (3), and, the conversion mechanisms (3) being arranged clockwise around the central axis of the blade-shaped structure (1), whereby each of the conversion mechanisms (3) is configured to rotate clockwise or counter clockwise alternately, i.e. if one rotates clockwise, the next rotates counter clockwise, the next rotates clockwise and the last rotates counter clockwise; and wherein on a lower face of a central part of the blade-shaped structure (1) a tube (5) of a length greater than the depth reached by the conversion mechanisms (3) is fixed, and whereby to the tube (5) is attached a fixed plate (6) along the entire length of a generatrix of the tube (5) and located at the mid-position of the imaginary line joining two adjacent conversion mechanisms (3) clockwise about the axis of the blade-shaped structure (1), so that the forces acting on the fixed plate (6) rotate the assembly so that it always faces the entire cross-section of the maximum thrust surface perpendicular to the direction of the water flow, which enters through one side of an imaginary square that would form the four conversion mechanisms (3); and wherein the tube (5) is partially closed at its lower end and has a chain or mooring cable attached to its central axis and to an anchor or deadman at the bottom, with said tube (5) having two openings for an inlet and outlet electrical cables.

2. Independent multiple hydrogenerator on a floating blade with maximum thrust surface and self-orienting according to claim 1, whereby each of the electric generators (2) is accessible out of the water by means of a hatch (7) on the immediately upper part of the floating blade-shaped structure (1).

3. Independent multiple hydrogenerator on a floating blade with maximum thrust surface and self-orienting according to claim 1, whereby the floating blade-shaped structure (1) has at its centre and out of the water a dome (4) also accessible through a hatch (8), inside which the connections, couplings and electrical treatment of the electrical energy waves produced independently by each of the electric generators (2) are carried out.

4. Independent multiple hydrogenerator on a floating blade with maximum thrust surface and self-orienting according to claims 1 and 5, whereby the electrical waves produced by the four independent electric generators (2) can be treated electrically and coupled in series, in parallel or in a mixed configuration, depending on the speed of the water current at any given moment, for maximum energy exploitation.

## Patentansprüche

1. Unabhängiger Mehrfach-Wasserstoffgenerator auf einer schwimmenden Schaufel mit maximaler Schubfläche und selbstorientierend, der eine Reihe von Umwandlungsmechanismen (3) zur Umwandlung der linearen Bewegung eines Fluids in die Drehbewegung einer Welle einsetzt, wobei der Hydrogenator mindestens eine schwimmende schaufelförmige Struktur (1) mit vier Armen umfasst, an deren jedem Ende sich ein elektrischer Generator (2) befindet, der von einem Umwandlungsmechanismus (3) angetrieben wird, und wobei der Umwandlungsmechanismus (3) im Uhrzeigersinn um die zentrale Achse der schaufelförmigen Struktur (1) angeordnet ist, wobei jeder der Umwandlungsmechanismen (3) so konfiguriert ist, dass er sich im Uhrzeigersinn dreht, der nächste sich im Uhrzeigersinn dreht und der letzte sich gegen den Uhrzeigersinn dreht; und wobei an einer unteren Fläche eines zentralen Teils der schaufelförmigen Struktur (1) ein Rohr (5) mit einer Länge, die größer ist als die von den Umwandlungsmechanismen (3) erreichte Tiefe, befestigt ist und wobei an dem Rohr (5) eine feste Platte (6) entlang der gesamten Länge einer Erzeugenden des Rohrs (5) befestigt ist und sich in der mittleren Position der imaginären Linie befindet, die zwei benachbarte Umwandlungsmechanismen (3) im Uhrzeigersinn um die Achse der schaufelförmigen Struktur (1) verbindet, so dass die auf die feste Platte (6) wirkenden Kräfte die Anordnung so drehen, dass sie immer dem gesamten Querschnitt der maximalen Schubfläche senkrecht zur Richtung des Wasserstroms gegenübersteht, der durch eine Seite eines imaginären Quadrats eintritt, das die vier Umwandlungsmechanismen (3) bilden würde; und wobei das Rohr (5) an seinem unteren Ende teilweise geschlossen ist und eine Kette oder ein Festmacherkabel aufweist, die bzw. das an seiner Mittelachse und an einem Anker oder Totmann am Boden befestigt ist, wobei das Rohr (5) zwei Öffnungen für einen Einlass und einen Auslass für elektrische Kabel aufweist.

2. Unabhängiger Mehrfach-Wasserstoffgenerator auf einem schwimmenden Blatt mit maximaler Schubfläche und Selbstausrichtung nach Anspruch 1, wobei jeder der elektrischen Generatoren (2) durch eine Luke (7) am unmittelbar oberen Teil der schwimmenden blattförmigen Struktur (1) aus dem Wasser heraus zugänglich ist.

3. Unabhängiger Mehrfach-Wasserstoffgenerator auf einem schwimmenden Blatt mit maximaler Schubfläche und Selbstausrichtung nach Anspruch 1, wobei die schwimmende blattförmige Struktur (1) in ihrer Mitte und außerhalb des Wassers eine Kuppel (4) aufweist, die auch durch eine Luke (8) zugänglich ist, in der die Verbindungen, Kupplungen und die elektrische Behandlung der von jedem der elektrischen Generatoren (2) unabhängig erzeugten elektrischen Energiewellen durchgeführt werden.

4. Unabhängiger Mehrfach-Wasserstoffgenerator auf einem schwimmenden Blatt mit maximaler Schubfläche und Selbstausrichtung nach den Ansprüchen 1 und 5, wobei die von den vier unabhängigen elektrischen Generatoren (2) erzeugten elektrischen Wellen elektrisch behandelt und in Abhängigkeit von der Geschwindigkeit der Wasserströmung zu einem bestimmten Zeitpunkt in Reihe, parallel oder in einer gemischten Konfiguration gekoppelt werden können, um eine maximale Energieausnutzung zu erreichen.

## Revendications

1. Hydrogénérateur multiple indépendant sur une lame flottante avec une surface de poussée maximale et auto-orientée utilisant une série de mécanismes de conversion (3) pour convertir le mouvement linéaire d'un fluide en mouvement rotatif d'un arbre, l'hydrogénateur comprenant au moins une structure flottante en forme de lame (1) avec quatre bras à chaque extrémité desquels se trouve un générateur électrique (2) entraîné par un mécanisme de conversion (3), et, le mécanisme de conversion (3) étant disposé dans le sens des aiguilles d'une montre autour de l'axe central de la structure en forme de pale (1), chacun des mécanismes de conversion (3) étant configuré pour tourner dans le sens des aiguilles d'une montre, le suivant tournant dans le sens des aiguilles d'une montre et le dernier tournant dans le sens inverse des aiguilles d'une montre ; et dans lequel un tube (5) d'une longueur supérieure à la profondeur atteinte par les mécanismes de conversion (3) est fixé sur la face inférieure d'une partie centrale de la structure en forme de lame (1) et dans lequel une plaque fixe (6) est attachée au tube (5) sur toute la longueur d'une génératrice du tube (5) et située au milieu de la ligne imaginaire reliant deux mécanismes de conversion adjacents (3) dans le sens des aiguilles d'une montre autour de l'axe de la structure en forme de lame (1), de sorte que les forces agissant sur la plaque fixe (6) fassent tourner l'ensemble de manière à ce qu'il soit toujours face à la section transversale entière de la surface de poussée maximale perpendiculaire à la direction du flux d'eau, qui pénètre par un côté d'un carré imaginaire qui formerait les quatre mécanismes de conversion (3) ; et dans lequel le tube (5) est partiellement fermé à son extrémité inférieure et a une chaîne ou un câble d'amarrage attaché à son axe central et à une ancre ou un homme mort au fond, ledit tube (5) ayant deux ouvertures pour un câble électrique d'entrée et de sortie.

2. Hydrogénérateur multiple indépendant sur une pale flottante à surface de poussée maximale et auto-orientable selon la revendication 1, dans lequel chacun des générateurs électriques (2) est accessible hors de l'eau au moyen d'une trappe (7) située sur la partie immédiatement supérieure de la structure en forme de pale flottante (1).

3. Hydrogénérateur multiple indépendant sur une pale flottante à surface de poussée maximale et auto-orientable selon la revendication 1, la structure flottante en forme de pale (1) ayant en son centre et hors de l'eau un dôme (4) également accessible par une trappe (8), à l'intérieur duquel sont réalisés les connexions, les couplages et le traitement électrique des ondes d'énergie électrique produites indépendamment par chacun des générateurs électriques (2).

4. Hydrogénérateur multiple indépendant sur pale flottante à surface de poussée maximale et auto-orientable selon les revendications 1 et 5, les ondes électriques produites par les quatre générateurs électriques indépendants (2) pouvant être traitées électriquement et couplées en série, en parallèle ou dans une configuration mixte, en fonction de la vitesse du courant d'eau à un moment donné, pour une exploitation maximale de l'énergie.
